# EUROPEAN PATENT APPLICATION

(11) **EP 4 235 453 A1**
(43) Date of publication of application: **30.08.2023**
(21) Application number: 22158513.6
(22) Date of filing: 24.02.2022
(51) Int. Cl.: G06F 16/2458

(54) **METHOD FOR CREATING AN INDEX FOR REPORTING LARGE-SCALE VARIANT CLUSTERINGS**

(71) Applicant: Celonis SE, 80333 München (DE)
(72) Inventor: Thiel, Konstantin Emil, 1220 Wien (AT); Augsten, Nikolaus, 5020 Salzburg (AT); Kocher, Daniel, 5301 Eugendorf (AT); Mann, Willi, 82031 Grünwald (DE)
(74) Representative: 2s-ip Schramm Schneider Bertagnoll Patent- und Rechtsanwälte Part mbB

(57) **Abstract**

Provided is a computer-implemented method for computing an index for a first density-based clustering of a collection of records, wherein the index is stored with a storage device. The index supports the extraction of exact clusterings for any selected threshold distance ε^{∗} less than or equal to a predefined threshold distance ε and a predefined number of records *MinPts*, which forms the pair of input parameters for which the index is computed.

## Description

### Field of the invention

The invention relates to a computer-implemented method for computing an index for a density-based clustering of a collection of records. More specifically, the index enables an efficient exploration of multiple parameter settings for exact density-based clusterings.

### Background of the invention

An important task in data analysis projects in general, and in particular in the domain of process mining, is the identification of groups of similar objects in a data set. Methods that address this issue are summarized under the term clustering.

Among the clustering methods, one approach is called density-based clustering, which was introduced by Ester et al. (A Density-Based Algorithm for Discovering Clusters in Large Spatial Databases with Noise, Proceedings of the Second International Conference on Knowledge Discovery and Data Mining (1996), AAAI Press, 226-231) alongside with the DBSCAN algorithm to compute density-based clusters for a given data set. The idea of density-based clustering is to form clusters out of regions of high density in the space populated by the data set, also called data space. Clusters are separated by regions of low density and objects that are far away from dense regions are labelled as noise.

The DBSCAN algorithm can be applied on a data set without needing to know the number of clusters present in the data set in advance. Moreover, no assumption regarding the statistical distribution of data within the data set is required. The DBSCAN algorithm only requires the input of a minimum density that objects must meet in order to form a cluster. This minimum density is determined by two input parameters commonly referred to as a predefined threshold distance ε and a minimum number of neighboring records *MinPts.* Hence, the DBSCAN algorithm only requires a minimal background knowledge to analyze and explore patterns in a data set.

In many scenarios, the correct parameter setting is not known in advance and depends on the actual data being investigated. In fact, often there is no unique density setting which captures all meaningful clusters of a data set. Consequently, it is necessary to try out several different settings until a good/satisfying clustering is found.

However, the DBSCAN algorithm is computationally expensive, as it involves *O*(n²) distance computations. This complexity poses a severe problem for the application of DBSCAN in the era of big data. In fact, even a highly optimized state-of-the-art implementation of DBSCAN has prohibitively long runtimes when applied to large real-world data sets, in particular of the domain of process mining, which limits the parameter space that can be explored for optimizing the clustering result.

In practice, DBSCAN has to be applied several times for different input parameter settings until a satisfying result is achieved. The OPTICS algorithm by Ankerst et al. (OPTICS: Ordering Points to Identify the Clustering Structure, Proceedings of ACM SIGMOD Int. Conf. on Management of Data (1999), Vol. 28 ACM New York, NY, USA, 49-60) attempts to overcome this issue.

Similar to the DBSCAN algorithm, the OPTICS algorithm requires two input parameters: a predefined distance value ε and a minimal number of neighboring records *MinPts.* The OPTICS algorithm computes a (standard) cluster ordering that contains information about any density-based clustering with respect to a threshold value ε^{∗} which does not exceed the input threshold value ε, for the same number of neighboring records *MinPts.* The idea is that one computation of OPTICS substitutes several runs of DBSCAN for threshold values ε^{∗} smaller or equal to the input threshold value ε of the OPTICS algorithm. The OPTICS algorithm computes a cluster ordering, which is a permutation of the input data set that contains certain additional measurements for each record of the data set.

However, the cluster ordering computed by OPTICS can formally only yield approximate DBSCAN clusters. While DBSCAN produces an exact clustering, OPTICS-based clusterings are density-based but not exact. The clustering results are approximate in that objects which are located at borders of clusters are frequently wrongly identified as noise. Thus, the cluster ordering computed by OPTICS is also non-deterministic. In practice, the degree of approximation reached by the OPTICS algorithm cannot be estimated intrinsically, i.e., without the need of further computations.

### Object of the invention

Therefore, it is an object of this invention to provide a method for an efficient computation of improved density-based clusterings, thereby enabling users to interactively explore a parameter space bound by input parameters, while guaranteeing an exact clustering result at least for the input parameters.

### Solution according to the invention

According to the invention, this object is solved by a method according to the independent claim. Preferred embodiments and further developments of the invention are defined in the dependent claims.

Accordingly, a computer-implemented method for computing an index for a first density-based clustering of a collection of records is provided, wherein the index is stored with a storage device, wherein each record
- is initially marked as unprocessed,
- comprises a first attribute and a second attribute, and
- forms part of a neighborhood within a predefined threshold distance,
wherein a record is a core record if its neighborhood comprises at least a predefined number of records, and the record is a non-core record if its neighborhood comprises less than the predefined number of records, wherein the index is computed according to the following steps:
a) selecting an unprocessed record of the collection of records and computing a core distance for the selected unprocessed record, wherein the core distance is the smallest distance from the selected unprocessed record at which its neighborhood still comprises at least the predefined number of records,
b) if the selected unprocessed record is a core record, assigning the core distance to the first attribute and labelling the selected unprocessed record as core record, else, assigning a predefined value to the first attribute and labelling the selected unprocessed record as non-core record,
c) adding the selected unprocessed record to the index and marking the selected unprocessed record as processed,
d) if the selected processed record is a core record, processing each record of the neighborhood of the selected processed record, wherein
   computing a reachability distance for each record, wherein the reachability distance is the smallest distance at which a respective record is still directly density-reachable from the selected processed record,
   populating a priority queue with each record which is marked as unprocessed in an ascending order of its reachability distance, where-in the reachability distance is assigned to the second attribute,
   removing each record which was previously labelled as non-core record and outputs a smaller reachability distance than previously assigned to its second attribute from the index, wherein each removed record is marked as unprocessed and wherein each removed record is inserted into the priority queue according to the ascending order of its reachability distance, and
e) appending each record of the priority queue to the index, where-in each record is marked as processed, wherein if the appended record is a core record, then the records of its neighborhood are processed according to step d), wherein the steps a) to e) are repeated until all records of the collection of records are processed and inserted into the index.

The method according to the invention has the advantage that it enables varying the threshold distance of density-based clustering, wherein it yields an exact clustering for the predefined threshold distance and at least an approximation of the exact clustering for any smaller threshold distance. The approximation is generally superior to the corresponding approximation resulting from the OPTICS algorithm. In particular, it was found by the inventors that the density-based clustering resulting from the index according to the invention is very close or even equal to the exact clustering as resulting from the DBSCAN algorithm. In fact, it was found by the inventors that the OPTICS algorithm can only coincidently reach the quality of approximation resulting from the index according to the invention. The standard cluster ordering resulting from OPTICS is technically limited to report better approximations than the index according to the invention reports since the latter gathers more information from the collection of records to be clustered.

It is noted that the method according to the invention is designed for situations in which the neighborhoods are unknown in advance. Computing the neighborhood requires computationally expensive range queries to compute the neighborhood of a given record for a predefined threshold distance, and thus the core distance of a given record. If the neighborhoods were known in advance, the range query scaled with *O*(1) in runtime, such that traditional methods can be easily used. However, in many situations, in particular for new data sets, the neighborhoods are unknown in advance.

An exact clustering differs from a density-based clustering in that the exact clustering assigns each record representing an ambiguous border object to exactly one cluster. More formally, the exact clustering of a collection of records for a predefined threshold value and a predefined number of neighboring records is defined as a partitioning of the collection of records into at least one partition, such that
(1) every partition is identical to or a subset of a respective density-based cluster of the collection of records,
(2) all core records of a density-based cluster of the collection of records form part of the respective partition, and
(3) every border object forms part of exactly one partition that corresponds to a density-based cluster the border object belongs to.

With respect to DBSCAN the index according to the invention has the advantage that it provides an improved cluster ordering which supports index queries for an exact clustering with respect to any threshold distance less or equal to the input threshold distance without computing the exact clustering from scratch. It was found by the inventors that an index-query framework based on the index according to the invention results in clustering runtimes that are always superior to clustering runtimes achieved by the standard DBSCAN algorithm, especially for large data sets. Moreover, the index according to the invention has exactly the same requirements towards a data model as DBSCAN has, i.e., it can be applied to any domain.

The improvement of the method according to the invention over the OPTICS algorithm is based on the improved cluster ordering which picks up more information from the objects in the data set than the standard cluster ordering of OPTICS. The additional information is generated in particular by an adaptation of the update of the priority queue in step d). While in the OPTICS algorithm neighboring records of a core record are processed only once, the method according to the invention reprocesses neighboring records if they are non-core records and if their reachability distance is found to be smaller than previously assigned.

Further, upon inserting the records of the priority queue into the index according to step e), also neighboring records of inserted records which are core records are processed according to the improved update of the priority queue in step d). In particular, if a neighboring record is already in the priority queue, its reachability distance and position is updated, if required.

Although the method according to the invention involves a reprocessing of records, an empirical analysis of the OPTICS algorithm and the index according to the invention conducted by the inventors revealed that both algorithms share the identical asymptotic computational complexity. In other words, the small overhead caused by the improved update of the priority queue according to the invention is negligible in the case of large data sets.

Preferably, it is determined whether the selected unprocessed record is a core record between step a) and step b) by counting the records in the neighborhood of the selected unprocessed record.

Preferably, during processing of each record of the priority queue in step d), only if the first attribute is unassigned, the core distance is computed and assigned to the first attribute.

Preferably, each record of the index comprises a third attribute, in which a permutation order of the record is stored.

According to an aspect of the invention, an index-query framework is provided, i.e., the method comprises an extraction of a first exact clustering of the collection of records for the predefined threshold distance based on a combined evaluation of the reachability distance and the core distance of the records in the index according to a linear scan through the index, wherein each record is assigned either a cluster identifier or a noise identifier.

To extract clusters from the clustering result, the index computed by the method according to the invention is to be queried. It was found by the inventors that a standard query of the improved index, wherein the standard query is known, for instance, from OPTICS, already retrieves at least one exact clustering, namely when the threshold distance equals the predefined input threshold distance. This property does not hold for the standard cluster ordering, and therefore emphasizes that the index build by the method according to the invention contains more information than a standard ordering.

Preferably, the first exact clustering of the collection of records is extracted for a selected threshold distance, wherein the selected threshold distance is less than or equal to the predefined threshold distance, wherein the method further comprises a candidate verification step, wherein for an extracted cluster of the first exact clustering each record
- which is located in the index closely ahead of the extracted cluster,
- of which a computed core distance is assigned the first attribute, and
- to which the noise identifier is assigned,
hereafter also referred to as candidate record, is verified against the records of the extracted cluster labelled as core records and to which an assigned computed core distance is less than or equal to the selected threshold distance.

The preferred index query has the advantage that also for threshold distances smaller than the predefined threshold distance used during creation of the index, exact clusterings can be reported within an efficient runtime. This advantage is achieved through a targeted search for records representing missing border objects which were previously assigned as core records. These border objects are subsequently also called former core objects. A specific object is considered a former core object with respect to a threshold distance that is smaller than the input threshold distance, if the number of neighboring objects of said object satisfies the core criterion only for the input threshold distance and not for the smaller threshold value.

The targeted search for former core objects can be limited to records labelled as noise records which are located at the left hand side of a cluster under consideration in the index, i.e., located in the index closely ahead of the extracted cluster. In other words, the search space of the targeted search can be limited to noise records which have a lower permutation order number assigned to their third attribute than the records of the respective extracted cluster. Moreover, the permutation order of specific candidate records must be larger than or equal to the permutation order of the closest record that has a predefined value (infinity) assigned to its second attribute and is located to the left hand side of the cluster under consideration. This limitation of the search space is based on the observation that former core objects cannot occur to the left of the first object in the cluster with respect to the predefined threshold distance that surrounds the cluster under consideration with respect to the smaller selected threshold distance.

In comparison to computing an exact clustering by DBSCAN from scratch the index query according to an aspect of the invention is more efficient, in particular in terms of the number and complexity of the range queries required to compute the neighborhoods for any threshold distance less or equal to the predefined threshold distance. The DBSCAN algorithm requires for each object a range query over the entire dataset. In contrast, index querying requires range queries only for the candidate records over the collection of core records (or vice versa).

Preferably, the candidate verification step is executed for each extracted cluster of the first exact clustering after the extraction of each extracted cluster, respectively.

Preferably, a second exact clustering of the collection of records is computed based on the predefined threshold distance and a selected number of records, wherein the selected number of records is larger than the predefined number of records, wherein the collection of records is reduced to the records to which the cluster identifier is assigned according to the first exact clustering.

The second exact clustering can be computed using any method delivering exact clusterings, in particular the index-query framework according to an aspect of the invention and/or the DBSCAN algorithm.

In one embodiment, the second exact clustering is computed based on the selected threshold distance, wherein the collection of records is reduced to the records to which the cluster identifier is assigned according to the first exact clustering based on the predefined threshold distance.

Preferably, the collection of records is separated into at least one subset, wherein each subset of the at least one subset corresponds to an extracted cluster of the first exact clustering with respect to the predefined threshold distance, wherein the second exact clustering is computed for each subset separately.

Preferably, in step d) the cluster identifier is increased and each record of the neighborhood of the selected processed record is inserted into a border record collection of the respective cluster identifier if the respective record is labelled as non-core record, wherein each border record collection is merged with the subset corresponding to the respective cluster identifier prior to computing the second exact clustering for each subset.

Hence, to each subset corresponds exactly one border record collection.

A non-core record for a given threshold value and a required number of neighboring records is defined as a record which has less records in its neighborhood than the required number of neighboring records.

Preferably, each record comprises a fourth attribute, wherein for each record, the number of records of its neighborhood is assigned to the fourth attribute during the step b) and the step d).

Preferably, only for each core record, the number of records comprised in its neighborhood is assigned to the fourth attribute during the step b) and the step d).

Preferably, the second exact clustering is computed using a density-based spatial clustering with noise - DBSCAN - algorithm.

Preferably, each record of the collection of records represents a process instance of a process, wherein the process was executed in a source computer system or with aid of the source computer system.

### Brief description of the figures

Details and features of the invention as well as concrete embodiments of the invention can be derived from the following description in connection with the drawing, in which:
- Fig. 1: shows a flow chart of step d) for the creation of the index using an embodiment of the invention;
- Fig. 2a: sketches the concept of the core distance C;
- Fig. 2b: sketches the concept of the reachability distance R;
- Fig. 3: shows reachability plots for a standard query on the index built using OPTICS (a) and the index built by an embodiment according to the invention (b) for the example data set of Table 1, with a threshold value of 1/3;
- Fig. 4: shows reachability plots for a standard query on the index built using OPTICS (a) and the index built by an embodiment of the method according to the invention (b) for the example data set of Table 1, with a threshold value of 1/4;
- Fig. 5: summarizes the index-query framework according to an aspect of the invention and in comparison to prior art;
- Fig. 6: visualizes the accumulated runtimes of the DBSCAN algorithm and the index-query framework according to an aspect of the invention for a selection of predefined number of records *MinPts* as measured for the CELONIS-1 data set; and
- Fig. 7: sketches the density filtering according to an aspect of the invention.

### Detailed description of the invention

The index for a density-based clustering of a collection of records computed by the method according to the invention represents an improved cluster ordering of the records. The cluster ordering is improved in particular over the standard cluster ordering as built by the OPTICS algorithm.

The index is stored with a storage device, in particular in the main memory of the storage device.

Each record of the collection of records is initially marked as unprocessed. Upon insertion into the index, each record comprises a first attribute and a second attribute. Further, each record forms part of a neighborhood within a predefined threshold distance ε. The predefined threshold distance ε is a first input parameter to the method according to the invention.

A record is a core record if its neighborhood comprises at least a predefined number of records *MinPts.* The predefined number of records *MinPts* is a second input parameter to the method according to the invention. Accordingly, the record is a non-core record if its neighborhood comprises less than the predefined number of records *MinPts.*

The index is computed according to the following steps.

In step a) an unprocessed record is selected of the collection of records. For the selected unprocessed record, a core distance is computed. The core distance of a record is the smallest distance such that the record is still a core object. Non-core records such as records representing noise objects and border objects have no valid core distance value.

In step b) it is tested if the selected unprocessed record is a core record, e.g., by counting the number of records in the neighborhood of the selected unprocessed record. If yes, assigning the core distance computed in step a) to the first attribute of the selected unprocessed record and labelling the selected unprocessed record as core record. Else, assigning a predefined value, such as infinity, ∞, to the first attribute of the selected unprocessed record and labelling the selected unprocessed record as non-core record.

Hence, step a) and step b) essentially require a computation of the neighborhood of the selected unprocessed record, which is based on computationally expensive range queries.

In step c), the selected unprocessed record is appended to the index. Accordingly, the record is marked as processed.

In step d), if the selected processed record is a core record, each record of its neighborhood is processed according to an improved update of the priority queue.

In step e), the records of the priority queue are inserted into the index, wherein step d) is repeated for neighboring records which are core records. In doing so, for each record of the priority queue to be inserted into the index the core distance is computed and assigned to the first attribute. Moreover, if the corresponding record is a core record, it is labelled as a core record, else it is labelled as a non-core record.

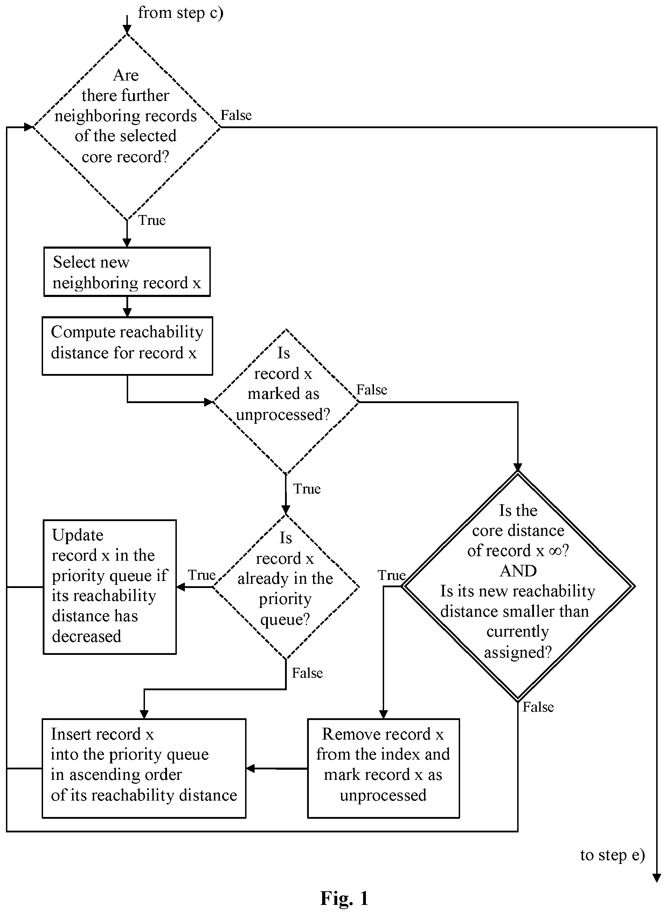

Fig. 1 shows a flow chart of step d) according to an embodiment of the invention, which visualizes the processing of the neighboring records as discussed below in some more detail.

For each record of the neighborhood of the selected processed record, a reachability distance is computed. The reachability distance is defined with respect to the concept of density-reachability: The reachability distance of a neighboring record with respect to its core record is the smallest distance such that the neighboring record is still directly density-reachable from the core record. At any smaller distance, either the neighboring record would be removed from the neighborhood of the core record or the core record would lose its core property meaning that no record can anymore be directly density-reached from it.

Each neighboring record which is marked as unprocessed is inserted into a priority queue in an ascending order of its reachability distance. The reachability distance is assigned to the second attribute of the record. If the neighboring record under consideration is already in the priority queue, wherein the newly computed reachability distance is smaller than the reachability distance currently assigned, its position is updated, in particular decreased, according to the ascending order of its reachability queue.

Some of the records in the neighborhood of the selected processed record may have been already processed before. According to the invention, each neighboring record which is marked as processed is removed from the index if it was previously labelled as non-core record and outputs a smaller reachability distance for the selected processed record than previously assigned to its second attribute. The neighboring record removed from the index is marked as unprocessed.

Neighboring records, which are marked as processed and were previously labelled as core records, are skipped.

Hence, step d) of the method according to the invention adapts the update function of the priority queue with respect to OPTICS by the branch comprising the decision framed by a double line in Fig. 1. There are several conditions for the adaptation of the priority queue's update function to be executed. Primarily, the record under consideration must have been already processed before. Moreover, the record under consideration must be a non-core record, in particular a border object with respect to the predefined threshold distance ε. Eventually, the newly computed reachability distance for the object under consideration must be smaller than the reachability distance currently assigned to its second attribute. If all of these conditions apply, the record under consideration is marked as unprocessed again and is removed from the index. Finally, the record under consideration is inserted into the priority queue at the position that corresponds to the updated value assigned to its second attribute.

In step e), each record of the priority queue is then appended to the index and accordingly marked as processed. If a record of the priority queue is a further core record, also the records of its corresponding neighborhood are processed according to step d).

In a standard cluster ordering, the reachability distance of an object is only minimized with respect to the objects that were processed before. In contrast, step d) of the method according to the invention guarantees that the reachability distance of each neighboring record with respect to the predefined threshold distance ε is minimized with respect to all other records in the data set.

Eventually, the steps a) to e) are repeated until all records of the collection of records are processed and inserted into the index.

The resulting data structure representing the index according to the invention therefore comprises the following attributes for each record:
1) A first attribute, in which the core distance of the record is stored,
2) A second attribute, in which the reachability distance of the record is stored, wherein, if the record under consideration is a neighboring record with respect to the predefined threshold distance ε, the reachability distance is globally minimized,
3) A third attribute, in which a permutation result, i.e., a number between one and the number of records in the collection of records, is stored.

In comparison to the standard cluster ordering as obtained from OPTICS, the values of the second attribute and of the third attribute differ in the index according to the invention. This results from the fact that neighboring objects are repositioned when their reachability distance is further decreased along processing of the collection of records.

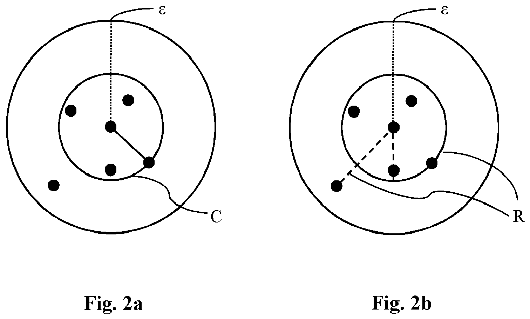

Fig. 2a sketches the concept of the core distance C.

Shown in Fig. 2a is a neighborhood of a core record (located in the center)for the predefined threshold distance ε and wherein the predefined number of records *MinPts* equals five. The neighborhood of the core record has six neighboring records, wherein some neighboring records can be non-core records and other neighboring records can be further core records. Note that each record counts as a neighboring record of itself. The core distance C for the core record under consideration is visualized as a circle of which the radius is drawn as a solid line. In this example, the core distance C is smaller than the predefined threshold distance ε.

Fig. 2b sketches the concept of the reachability distance R.

Shown in Fig. 2b is the same neighborhood as in Fig. 2a. For a neighboring record which is located further away from the core record under consideration than the core distance C of the core record, the reachability distance R equals the distance between the respective non-core record and the core record, depicted by a dashed line. The distance can be calculated using a predefined distance function. For a neighboring record located closer to the core record than the core distance C of the core record, the reachability distance R equals the core distance C.

In the following, an embodiment of the method according to the invention is presented by way of a concrete example drawn from the domain of process mining.

In the field of process mining, it is aimed to analyze data that describes processes, such as technical processes (e.g., a soldering process, or a manufacturing process) or business processes (e.g., order processes). Processes are executed in a source computer system and/or with aid of a source computer system. Executions of a process are called cases or process instances. A process instance comprises a series of process steps or events which were executed during recording of the process instance. Hence, a process instance is described as a sequence of time-stamped events, which is technically represented by a process protocol or event log.

An example process instance can be given by the sequence: "Order", "Package", "Issue Receipt", "Payment", and "Collect". In practice, the process instance can be modelled by forming 2-grams, for instance, {("Order", "Package"), ("Package", "Issue Receipt"), ("Issue Receipt", "Payment"), ("Payment", "Collect")}. The 2-grams can be mapped to sets comprising a number of tokens, wherein duplicate tokens are removed, such that the process instance can be represented by an integer-based set, e.g., {1, 2, 3, 4}. This modelling approach has the advantage of preserving order information between the individual events. Moreover, the process instance can be efficiently stored in a data base as a set of its tokens.

However, for the sake of simplicity, an even simpler data model is assumed in the following example. Each process step is directly mapped to a unique integer token. For instance, the process step "Order" is assigned to token "1", the process step "Package" is assigned to token "2", etc. Consequently, the example process can be represented by the set {1, 2, 3, 4, 5}. The resulting mapping of process steps to tokens is summarized in Table 1, wherein additional process steps are added for the sake of the example.

**Table 1: Mapping of process steps to tokens.**

| Process step | Token |
|---|---|
| Order | 1 |
| Package | 2 |
| Issue Receipt | 3 |
| Payment | 4 |
| Collect | 5 |
| Withdrawal | 6 |
| Assignment | 7 |
| Refund | 8 |

A density-based clustering assigns each record of the collection of records either to some of the detected clusters or to a noise group. Moreover, the records assigned to a detected cluster are subdivided into core objects and border objects. Core objects (core records) have at least a predefined number of records *MinPts* of neighboring records and hold a cluster together. Border objects (border records) have less than the predefined number of records *MinPts* as neighboring records but are located close to some core objects.

While the DBSCAN algorithm can be used to compute the exact clustering of the collection of records with respect to one specific pair of input parameters ε; *MinPts,* the index computed by an embodiment of the method according to the invention supports the extraction of exact clusters even for multiple input parameters ε^{∗} ≤ ε for a predefined number of records *MinPts,* without having to recompute DBSCAN from scratch.

The creation of the index and the extraction (query) of detected clusters from the index is demonstrated on the collection of records presented in Table 2.

**Table 2: Exemplary collection of records wherein the records represent process instances.**

| Case ID | Record |
|---|---|
| r1 | {1, 2} |
| r2 | {1, 3} |
| r3 | {1, 2, 3} |
| r4 | {1, 2, 4} |
| r5 | {1, 3, 4} |
| r6 | {1, 2, 3, 4} |
| r7 | {3, 4, 6, 7, 8} |
| r8 | {3, 5, 6, 7, 8} |
| r9 | {1, 2, 3, 4, 5, 6} |
| r10 | {1, 4, 5, 6, 7, 8} |
| r11 | {3, 4, 5, 6, 7, 8} |
| r12 | {1, 2, 3, 4, 5, 6, 7, 8} |

In this example, the predefined distance function is selected to be the Jaccard distance function. For the Jaccard distance, a distance value close to zero reflects two similar records and a distance value between two records close to one reflects two dissimilar records. As an example, the Jaccard distance between records r7 and r11 equals 1/6. Thus, in terms of density-based clustering, the records r7 and r11 are considered to be neighbors for any threshold distance ε of at least 1/6.

At first, the exact clustering of the collection of records with respect to specific parameter pairs is computed. These computations serve as a benchmark for the results obtained from the index according to the invention and from the standard cluster ordering produced by OPTICS. In the following, the predefined number of records *MinPts* is fixed to equal four, and two predefined threshold distances ε^{∗}, namely 1/3 and 1/4, are used. While the exact clustering can be computed with DBSCAN, for the sake of reproducibility, the pairs of neighbor and corresponding threshold distance are provided for all relevant core objects of the collection of records in Table 3. The computed exact clustering is listed in Table 4 and in Table 5 for the respective predefined threshold distances.

**Table 3: Neighborhood of the core records in the exemplary collection of records with respect to a predefined threshold distance ε = 1/3.**

| Core record | Pairs of neighboring record and distance |
|---|---|
| r3 | (r6, 1/4), (r1, 1/3), (r2, 1/3) |
| r6 | (r3, 1/4), (r4, 1/4), (r5, 1/4), (r9, 1/3) |
| r11 | (r7, 1/6), (r8, 1/6), (r10, 2/7), (r12, 1/4) |
| r12 | (r9, 1/4), (r10, 1/4), (r11, 1/4) |

**Table 4: Exact clusters of the exemplary collection of records with respect to ε = 1/3 and MinPts = 4.**

| Group ID | Group records |
|---|---|
| cluster 1 | {r1, r2, r3, r4, r5, r6} |
| cluster 2 | {r7, r8, r9, r10, r11, r12} |
| noise | Ø |

**Table 5: Exact clusters of the exemplary collection of records with respect to ε = 1/4 and MinPts = 4.**

| Group ID | Group records |
|---|---|
| cluster 1 | {r3, r4, r5, r6} |
| cluster 2 | {r7, r8, r9, r10, r11, r12} |
| noise | {r1, r2} |

For the exact clustering from Table 4 the threshold distance ε^{∗} equals 1/3. Cluster 1 consists of records r1 through r6. One of the common characteristics of these records is their short length, which ranges from two to four tokens. Moreover, all of these records contain token "1" and feature low token numbers in general, with a maximum token number of "4". From Table 1, we interpret that low tokens represent process steps that are typically executed at the beginning of a process instance (e.g., "Order" or "Payment"). Thus, it can be concluded that cluster 1 in this example contains process instances from the collection of records that are unfinished and yet to be continued.

On the other hand, cluster 2 consists of records r7 through r12. These records are of comparatively large size with the set length ranging from five to eight tokens. Moreover, these records feature events that do not occur in any of the records from cluster 1. For instance, the process step "Withdrawal" occurs in every record from cluster 2, whereas it is absent from the records of cluster 1. Note that the process step "Withdrawal" frequently co-occurs with process steps such as "Collect", "Assignment" or "Refund". Hence, cluster 2 can be considered as a group of process instances that are associated with withdrawals and, more generally, are further progressed than the process instances assigned to cluster 1.

Decreasing the threshold distance prevents some of the records from remaining in their corresponding neighborhood. As shown in Table 5, wherein the threshold distance ε^{∗} equals 1/4, these records fall out of their clusters and get assigned to the noise group. In this example, the records r1 and r2 become noise records for ε^{∗} equals 1/4. In contrast, the records that remain in their cluster also for the lower threshold distance are closer to each other, thereby forming denser regions in the data space.

So far to the semantics of the exact clusters of Table 4 and Table 5. In the following, the clusterings are computed both using the OPTICS algorithm and the index according to an embodiment of the invention.

In both cases, the generating distance, that is the predefined threshold distance, is set to the maximum distance of interest, i.e., ε equals 1/3. The OPTICS algorithm yields a standard cluster ordering and the index-build yields the index according to an embodiment of the invention. The standard cluster ordering and the index are different augmented permutations of the collection of records, wherein the permutation is referred to the measures of core distance C and reachability distance R that are obtained for each record in the collection of records. The resulting permutations can be visualized in a reachability plot, wherein the permuted records are plotted according to their resulting permutation order on the x-axis against their reachability distances on the y-axis.

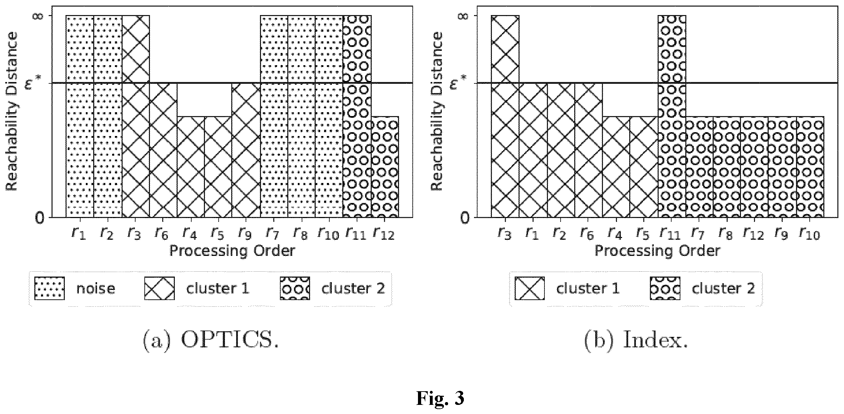

Fig. 3 visualizes the reachability distances for the cluster ordering obtained from OPTICS (a) and from the index (b) computed by an embodiment of the method according to the invention.

The reachability plot is a bar plot with one bar for each record in the data set. The bar height corresponds to the reachability distance assigned during the build of the index or cluster ordering, respectively. The records are plotted in processing order (of the extraction) from left to right along the x-axis. Hence, the clustering structure of the data set becomes visible in form of a sequence of valleys and peaks of reachability distance. Valleys correspond to regions of high-density and peaks are sparse records. As the bar height of a record depicts the smallest distance at which this record is density-reachable from the records to its left (smaller values of x), records with large bars separate clusters from other clusters and/or noise records.

As shown in the reachability plots of Fig. 3, the index built for the predefined threshold distance ε of 1/3 yields the exact clustering of Table 4. In contrast, OPTICS fails to obtain the exact clustering as there are several records that are falsely assigned to the noise group, namely record r1, r2, r7, r8 and r10.

This simple example already demonstrates, that the clustering result obtained from the index according to the invention for the generating threshold distance ε is the exact clustering such as obtained from DBSCAN, which can be also proven formally. The result obtained from OPTICS, however, is not an exact clustering result.

Note that in this example, the detected clusters are extracted using the standard query algorithm for both techniques. The standard query algorithm basically is a linear scan through the permutation and therefore has linear time complexity.

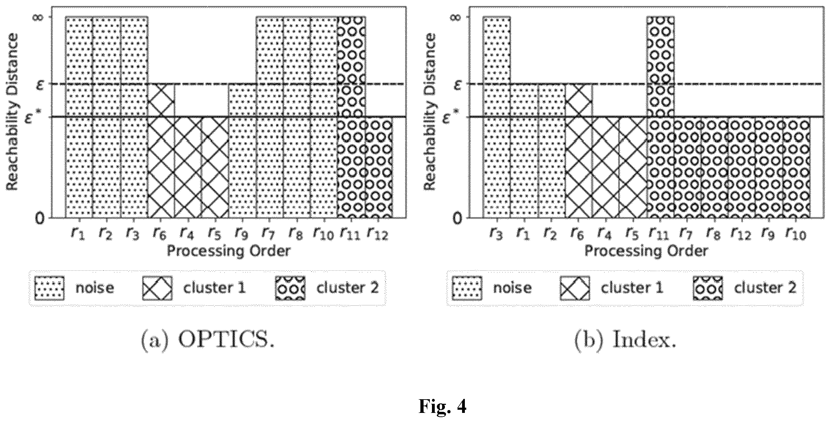

**Fig. 4** visualizes the reachability distances obtained from the OPTICS algorithm (a) and from the index according to an embodiment of the invention (b) for the threshold distance ε^{∗} of 1/ 4.

As shown in Fig. 4, the clustering results deviates for both methods from the exact clustering of Table 5. OPTICS manages to approximate cluster 1 with one record (r3) missing. However, OPTICS only finds two out of six records from cluster 2. On the other hand, based on the index according to an embodiment of the invention, the complete cluster 2 can be extracted. For cluster 1, both methods detect the same number of records.

When the threshold distance ε^{∗} is smaller than the predefined threshold distance ε, both OPTICS and the method according to an embodiment of the invention yield an approximation of the exact clustering. However, the approximation reported from the index is better in the sense that it loses fewer neighboring records to the noise group.

In fact, the set of records that can be falsely assigned to the noise group by the index according to an embodiment of the invention can be controlled and therefore tightly restricted. It was found by the inventors that only core records with respect to the predefined threshold distance that become neighboring records with respect to a smaller threshold distance can be falsely assigned. This restriction allows for a targeted search for the missing neighboring records for smaller threshold distances ε^{∗}. Using this targeted search improves the standard query in that it can report exact clusterings from the index according to an embodiment of the invention, also for any threshold distance ε^{∗} smaller than the predefined threshold distance ε.

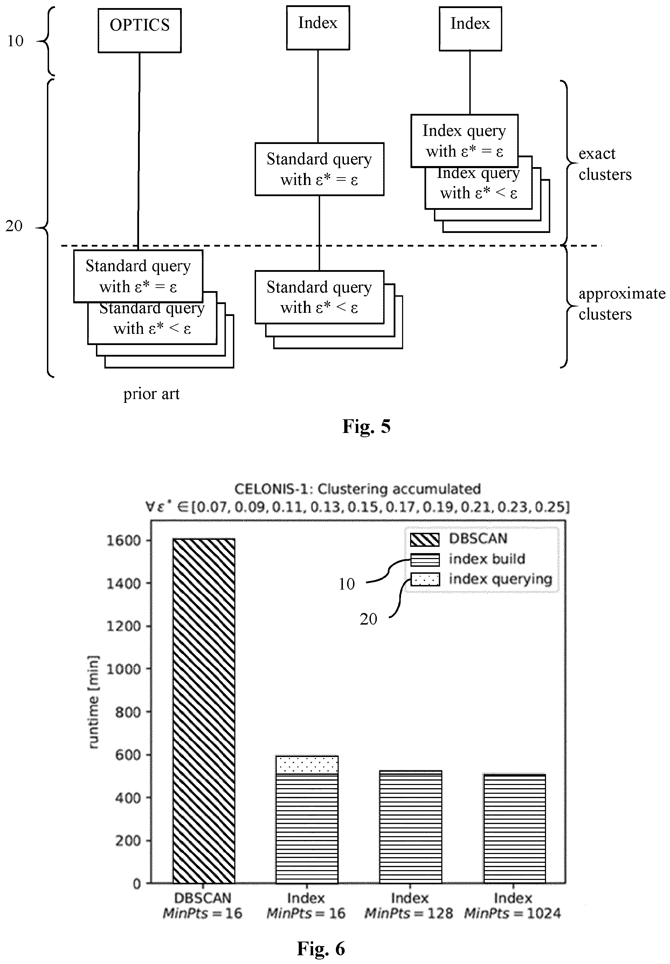

Fig. 5 summarizes the index-query framework according to an aspect of the invention and in comparison to prior art.

An index-query framework comprises a first phase 10, in which a cluster ordering is computed, and a second phase 20, in which the cluster ordering is queried to extract/report clusters. The index-query framework has the general advantage, that the computation of the cluster ordering, which can be time intensive, has to be performed only once for the maximum threshold distance ε of interest and a predefined number of records *MinPts.* Subsequently, in the second face 20, the clusters can be extracted from the clustering result for various threshold distances ε^{∗} smaller than or equal to the predefined threshold distance ε. The cluster extraction is usually quick, such that the exploration of various parameter settings can be performed interactively.

As outlined above, the OPTICS algorithm provides a-state-of-the-art algorithm for the index-query framework. In the first phase 10, a standard cluster ordering is computed, which can be queried using a standard query in the second phase 20. The standard query basically is a linear scan through the permutation obtained from the first phase 10. However, every cluster extracted from the cluster ordering of OPTICS is an approximate cluster.

Instead, the method according to the invention creates an index in the first phase 10, wherein the index supports the extraction of an exact clustering using the standard query with the predefined threshold distance ε. For any smaller threshold distance ε^{∗} ≤ ε, the standard query retrieves also approximate clusters from the index, wherein an approximate cluster can of course coincidently correspond to an exact cluster.

Preferably, the information contained in the index built by the method according to the invention is leveraged in that during the cluster extraction for smaller threshold distances ε^{∗} than the predefined threshold distance ε, a targeted search for former core objects is performed. Therein, the set of candidates for former core objects is verified against the records of the extracted cluster labelled as core records using range queries. This targeted search is only possible due to the additional information comprised in the index as compared to the standard cluster ordering. As a result, once the index is established, exact clusterings can be obtained for any threshold distance ε^{∗} smaller than or equal to the predefined threshold distance ε in an interactive way according to an aspect of the invention.

In general, an exact clustering contains more cluster objects, i.e., records assigned to a cluster, than an approximate clustering such as computed by OPTICS. To quantify the difference between an exact clustering and an approximate clustering, the relative ratio of the number of (deduplicated) cluster objects obtained from the index according to the invention and the number of (deduplicated) cluster objects obtained from OPTICS, can be computed. The inventors found in their experiments on a large scale process mining data set that the median of this relative ratio obtained for various generating input parameter pairs was found to be at least 1%. The missing cluster objects in the clustering obtained from OPTICS are falsely assigned to the noise group. Hence, for large data sets in the order of millions of records, a false assignment of cluster objects to the noise group in the order of 1% can effectively result in a large absolute number of missed cluster objects.

**Fig. 6** compares the accumulated runtime for the exact clusterings obtained from DBSCAN and the index-query framework according to an aspect of the invention.

The performance of the computation of exact clusterings is evaluated for a large-scale data set from the process mining domain, CELONIS-1. The exact clusterings are computed for ten threshold distances ε^{∗} equally spaced between 0.07 and 0.25. The predefined number of records *MinPts* is set to 16, 128 and 1024.

For the DBSCAN algorithm, only the parameter pairs comprising a predefined number of points *MinPts* of 16 are evaluated, since DBSCAN computes exact clusterings from scratch for every pair of selected threshold distance ε^{∗} and the predefined number of points *MinPts.* For the ten pairs in this example, the overall accumulated runtime for DBSCAN was longer than one day.

Using the index-query framework according to an aspect of the invention, the index has to be computed only once, which took about 9 hours for the predefined number of records *MinPts* of 16. The subsequent extraction of the ten exact clusterings from the precomputed index in the second phase 20 only took one hour.

Whereas the accumulated runtime to compute the index in the first phase 10 is roughly constant for the further evaluated values of the predefined number of records *MinPts,* the index querying 20, instead, is more efficient for higher values of the predefined number of records *MinPts.* At lower values of the predefined number of records *MinPts* the number of core records in the data set is large. Therefore, a large number of candidate verifications during the targeted search has to be performed, which explains why the index querying 20 has increasing accumulated runtimes for decreasing values of the predefined number of records *MinPts.*

As a result, the accumulated runtimes of this experiment show that the index-query framework according to an aspect of the invention is up to three times faster than the DBSCAN algorithm on the CELONIS-1 data set. The OPTICS algorithm is not part of this comparison as it fails to deliver exact clusterings.

In one embodiment, the neighborhood computation can be separated from the actual clustering algorithm. That is, the neighborhoods are precomputed in advance and are materialized. The materialization costs *O*(n²) memory, where n denotes the collection size. However, the advantage of this approach is an improved runtime due to the fact that neighborhoods can be computed asymmetrically. For instance, a set similarity join can be used, according to which a filter-verification framework avoids some of the distance computation. In particular, the AllPairs or the Metric-Join algorithm can be used for computing the set similarity join. In step b) of the method according to the invention, the pre-computed neighborhoods can then be simply looked up from the storage device (instead of computed), which reduces the runtime for the index build.

In one embodiment, the computation of neighborhoods and the candidate verification during the index querying for extracting exact clusters can both be implemented in parallel. Thus, the runtimes shown in Fig. 6 can be further improved.

In practice, the deduplication of records in a collection of records is important. In one embodiment, duplicate data is leveraged by deduplicating the sets during reading the collection of records into memory, wherein a duplicate count is stored for each of the deduplicated sets. These duplicate counts are eventually used to determine neighborhood sizes. This procedure ensures that a correct clustering is obtained, while actually only a part of the data is processed in memory. In the case of neighborhood materialization, the deduplication is even a necessary prerequisite in order to prevent that neighborhood grow too large and exceed the memory available on the computer.

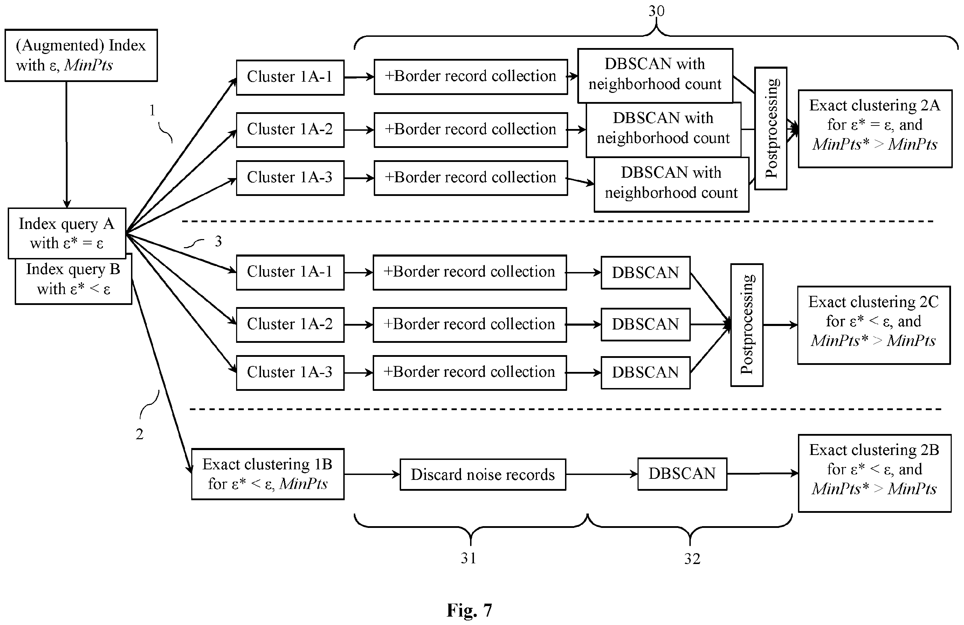

Fig. 7 sketches the density filtering according to an aspect of the invention.

In an aspect of the invention, a density filter 30 is introduced, which enables users to increase the density of a clustering by increasing the predefined number of records *MinPts.* Note that the threshold distance ε; ε^{∗} is considered constant during the density filtering 30. In combination with the index-query framework introduced above, the density filter 30 extends the parameter space for essentially interactive explorations of exact clusterings for any pair of selected threshold distance and selected number of records (ε^{∗}, *MinPts*^{∗}), wherein ε^{∗} <= ε and *MinPts*^{∗}>= *MinPts.* The fundamental idea of density filtering is to leverage the fact the dense clusters are subsets of spares clusters.

Hence, when a clustering with respect to a predefined number of records *MinPts* is computed, said clustering can be used to reduce the collection of records by the noise group for any subsequent computation using a predefined number of records *MinPts*^{∗} ≥ *MinPts.* Needless to say, the initial clustering ought to be an exact clustering in order to avoid filtering out falsely assigned noise records. Thus, the density filtering 30 is ideally applied to clusterings resulting from an index computed by the method according to the invention.

According to an aspect of the invention, there are three approaches to compute an exact clustering for a selected number of records *MinPts*^{∗} which is larger than the predefined number of records *MinPts* for which the index was computed. If the selected threshold distance ε^{∗} equals the predefined threshold distance ε, a first approach 1 is recommended. If the selected threshold distance ε^{∗} is smaller than the predefined threshold distance ε, a second approach 2 and a third approach 3 can be applied. The second approach 2 and the third approach 3 can also be applied in the case in which the selected threshold distance ε^{∗} equals the predefined threshold distance ε.

The first approach 1 and the third approach 3 are based on the computation of an augmented index, which is provided according to an aspect of the invention. The augmented index comprises a fourth attribute, in which the size of each neighborhood, a neighborhood count, is stored. Moreover, for each (exact) cluster with respect to the predefined threshold distance ε and the predefined number of records *MinPts,* a collection of all border objects (border record collection), i.e., non-core records, of a respective cluster is recorded.

In the first approach 1, the following steps are executed to obtain an exact clustering 2A for the predefined threshold distance and a selected number of records *MinPts*^{∗} larger than (or equal to) the predefined number of records *MinPts*: Obtaining the exact clusters 1A-1, ... 1A-n from querying the augmented index, where n denotes the number of detected clusters. By extracting the clusters from the augmented index, noise records are automatically discarded. Merging 31 each extracted cluster 1A-1, ... 1A-n with its respective border record collection such that also all ambiguous border objects are included in the resulting n subsets of the collection of records. Computing 32 the exact clustering 2A for the selected number of records *MinPts*^{∗} by invoking the DBSCAN algorithm on each subset separately, in particular in parallel, wherein the neighborhood count of the augmented index is used to directly obtain the set of core objects, and thus, reduce the number of required range queries. Further, post-processing the resulting clusterings to assign ambiguous border objects to the correct detected cluster, respectively. Merging the resulting clusterings from the separate DBSCAN runs, the ambiguous border objects are assigned to multiple detected clusters. The post-processing step achieves to reduce the multiple assignments into a single assignment, namely the assignment to exactly one cluster, respectively. Note that the post-processing step has a linear complexity.

In the second approach 2, the following steps are executed to obtain an exact clustering 2B for a selected threshold distance ε^{∗} smaller than (or equal to) the predefined threshold distance ε (used for generating the index) and a selected number of records *MinPts*^{∗} larger than (or equal to) the predefined number of records *MinPts*: Obtaining an exact clustering 1B for the selected threshold distance ε^{∗} from querying the index, wherein the exact clustering 1B can be also obtained from querying the augmented index. Discarding 31 the noise group from the exact clustering 1B to reduce the collection of records. Invoking 32 the DBSCAN algorithm on the reduced collection of records to compute the exact clustering 2B for the selected number of records *MinPts*^{∗}*.*

In the third approach 3, the following steps are executed to obtain an exact clustering 2B for a selected threshold distance ε^{∗} smaller than (or equal to) the predefined threshold distance ε (used for generating the index) and a selected number of records *MinPts*^{∗} larger than (or equal to) the predefined number of records *MinPts*: Obtaining the exact clusters 1A-1, ... 1A-n for the predefined threshold distance ε from querying the augmented index with the predefined threshold distance ε, where n denotes the number of detected clusters. By extracting the clusters from the augmented index, noise records are automatically discarded. Merging 31 each extracted cluster 1A-1, ... 1A-n with its respective border record collection such that also all ambiguous border objects are included in the resulting n subsets of the collection of records. Computing 32 the exact clustering 2C for the selected threshold distance ε^{∗} the selected number of records *MinPts*^{∗} by invoking the DBSCAN algorithm on each subset separately, in particular in parallel, and post-processing the resulting clusterings to assign ambiguous border objects to the correct detected cluster, respectively, as outlined above.

Using the density filter according to any of the three approaches 1; 2; 3 for the computation of exact clusterings for a selected number of records *MinPts*^{∗} ≥ *MinPts,* the data set (collection of records) can be reduced by the number of noise records such that range queries (neighborhood evaluations) performed on this reduced data set are accelerated. This is particularly useful, since range queries are the main cause of runtime in density-based clustering. As a result, the (augmented) index according to an embodiment of the invention can be directly used as a filter 30 for any denser number of records *MinPts*^{∗}*.*

In any case, to store the size of each neighborhood during (augmented) index build according to an aspect of the invention has the further advantage that the core records with respect to the predefined threshold distance ε and the selected number of records *MinPts*^{∗} can be determined quickly therefore reducing the number of required range queries.

As a result, the augmented index computed according to an aspect of the invention is capable of providing exact clusterings with respect to ε^{∗} ≤ ε and *MinPts* fixed, or with respect to *MinPts*^{∗} ≥ *MinPts* and ε fixed. That is, users can interactively increase the density of exact clusterings via one of the two input parameters while the other of the two input parameters remains fixed. In the second phase 20 the index query is used to vary the threshold distance ε. The density filtering 30 is used to vary the number of records *MinPts.* In combination, exact clusterings for any pair of threshold distance and number of records (ε^{∗}≤ ε, *MinPts*^{∗} ≥ *MinPts)* can be computed and explored interactively.

## Claims

1. Computer-implemented method for computing an index for a first density-based clustering of a collection of records, wherein the index is stored with a storage device,
wherein each record
- is initially marked as unprocessed,
- comprises a first attribute and a second attribute, and
- forms part of a neighborhood within a predefined threshold distance,
wherein a record is a core record if its neighborhood comprises at least a predefined number of records, and the record is a non-core record if its neighborhood comprises less than the predefined number of records, wherein the index is computed according to the following steps:
a) selecting an unprocessed record of the collection of records and computing a core distance for the selected unprocessed record, wherein the core distance is the smallest distance from the selected unprocessed record at which its neighborhood still comprises at least the predefined number of records,
b) if the selected unprocessed record is a core record, assigning the core distance to the first attribute and labelling the selected unprocessed record as core-record, else, assigning a predefined value to the first attribute and labelling the selected unprocessed record as non-core record,
c) adding the selected unprocessed record to the index and marking the selected unprocessed record as processed,
d) if the selected processed record is a core record, processing each record of the neighborhood of the selected processed record, wherein
computing a reachability distance for each record, wherein the reachability distance is the smallest distance at which a respective record is still directly density-reachable from the selected processed record,
populating a priority queue with each record which is marked as unprocessed in an ascending order of its reachability distance, wherein the reachability distance is assigned to the second attribute,
removing each record which was previously labelled as non-core record and outputs a smaller reachability distance than previously assigned to its second attribute from the index, wherein each removed record is marked as unprocessed and wherein each removed record is inserted into the priority queue according to the ascending order of its reachability distance, and
e) appending each record of the priority queue to the index, wherein each record is marked as processed, wherein if the appended record is a core record, then the records of its neighborhood are processed according to step d),
wherein the steps a) to e) are repeated until all records of the collection of records are processed and inserted into the index.

2. The method of claim 1, comprising a determination whether the selected unprocessed record is a core record between step a) and step b) by counting the records in the neighborhood of the selected unprocessed record.

3. The method according to any of the preceding claim, wherein during processing of each record of the priority queue in step d), only if the first attribute is unassigned, the core distance is computed and assigned to the first attribute.

4. The method according to any of the preceding claims, wherein each record of the index comprises a third attribute, in which a permutation order of the record is stored.

5. The method according to any of the preceding claims, comprising an extraction of a first exact clustering of the collection of records for the predefined threshold distance based on a combined evaluation of the reachability distance and the core distance of the records in the index according to a linear scan through the index, wherein each record is assigned either a cluster identifier or a noise identifier.

6. The method according to the preceding claim, wherein the first exact clustering of the collection of records is extracted for a selected threshold distance, wherein the selected threshold distance is less than or equal to the predefined threshold distance, wherein the method further comprises a candidate verification step, wherein for an extracted cluster of the first exact clustering each record
- which is located in the index closely ahead of the extracted cluster,
- of which a computed core distance is assigned the first attribute, and
- to which the noise identifier is assigned,
is verified against the records of the extracted cluster labelled as core records and to which an assigned computed core distance is less than or equal to the selected threshold distance.

7. The method according to the preceding claim, wherein the candidate verification step is executed for each extracted cluster of the first exact clustering after the extraction of each extracted cluster, respectively.

8. The method according to claim 5, 6 or 7, wherein a second exact clustering of the collection of records is computed based on the predefined threshold distance and a selected number of records, wherein the selected number of records is larger than the predefined number of records, wherein the collection of records is reduced to the records to which the cluster identifier is assigned according to the first exact clustering.

9. The method according to the preceding claim, wherein the second exact clustering is computed based on the selected threshold distance, wherein the collection of records is reduced to the records to which the cluster identifier is assigned according to the first exact clustering based on the predefined threshold distance.

10. The method according to the preceding claim, wherein the collection of records is separated into at least one subset, wherein each subset of the at least one subset corresponds to an extracted cluster of the first exact clustering with respect to the predefined threshold distance, wherein the second exact clustering is computed for each subset separately.

11. Method according to the preceding claim, wherein in step d) the cluster identifier is increased and each record of the neighborhood of the selected processed record is inserted into a border record collection of the respective cluster identifier if the respective record is labelled as non-core record, wherein each border record collection is merged with the subset corresponding to the respective cluster identifier prior to computing the second exact clustering for each subset.

12. The method according to any of the preceding claims, wherein each record comprises a fourth attribute, wherein for each record, the number of records of its neighborhood is assigned to the fourth attribute during the step b) and the step d).

13. The method according to the preceding claim, wherein only for each core record, the number of records comprised in its neighborhood is assigned to the fourth attribute during the step b) and the step d).

14. The method according to any of the preceding claims 8 to 13, wherein the second exact clustering is computed using a density-based spatial clustering with noise - DBSCAN - algorithm.

15. The method according to any of the preceding claims, wherein each record of the collection of records represents a process instance of a process, wherein the process was executed in a source computer system or with aid of the source computer system.
